# FASCICULE DE BREVET EUROPEEN

(11) **EP 3 732 001 B1**
(45) Date de publication et mention de la délivrance du brevet: **11.10.2023**
(21) Numéro de dépôt: 18830875.3
(22) Date de dépôt: 28.12.2018
(51) Int. Cl.: B25J 9/00

(54) **STRUCTURE D'EXOSQUELETTE**
EXOSKELETTSTRUKTUR
EXOSKELETON STRUCTURE

(30) Priorité: 28.12.2017 FR 1763301
(43) Date de publication de la demande: 04.11.2020
(73) Titulaire: Safran Electronics & Defense, 75015 Paris (FR); B-Temia Inc., St-Augustin-de-Desmaures, QC G3A 2J9 (CA)
(72) Inventeur: SOUCY, Francisco, Québec, Québec G1P 4R1 (CA); ZOSO, Nathaniel, Québec, Québec G2A 3E8 (CA); GAGNE, Sylvain, Québec, Québec G1P 4R1 (CA); BELANGER-DESBIENS, Alexandre, Québec, Québec G1P 4R1 (CA); GRENIER, Jordane, 92100 Boulogne-Billancourt (FR)
(74) Mandataire: Regimbeau
(86) Numéro de dépôt international: PCT/EP2018/097085
(87) Numéro de publication internationale: WO 2019/129856

(56) Documents cités:
- EP-A1- 2 944 438
- CN-B- 103 610 524
- JP-A- 2015 144 787
- KR-A- 20130 045 777
- US-A1- 2017 360 645

## Description

### DOMAINE DE L'INVENTION

L'invention concerne une structure d'exosquelette.

### ETAT DE LA TECHNIQUE

Les exosquelettes d'assistance à l'effort sont des structures mécaniques qui doublent la structure du squelette humain et qui permettent d'améliorer les capacités physiques du corps humain.

Il existe différents types d'exosquelettes d'assistance à l'effort qui dépendent des tâches à accomplir par l'utilisateur. Chaque type d'exosquelette permet de limiter ou de diminuer l'effort fourni par l'utilisateur lors de l'accomplissement de certaines tâches.

Cependant, l'utilisateur doit supporter le poids de la structure de l'exosquelette lorsque ce poids n'est pas transféré au sol, ce qui a pour conséquence de limiter la liberté de mouvement de l'utilisateur et de générer une charge supplémentaire qui est nécessairement transférée au bas du corps de l'utilisateur.

Par ailleurs, pour un utilisateur, il peut être difficile d'enfiler ou de retirer la structure d'exosquelette.

Le document JP 2015144787 décrit une structure d'exosquelette comprenant une partie destinée à être attachée à la jambe (42B), une partie destinée à être attachée au pied (43B) et un pivot (47B) autorisant une rotation de la partie destinée à être attachée au pied par rapport à la partie destinée à être attachée à la jambe autour d'un axe de flexion/extension de la cheville de l'utilisateur.

Le document EP 2 944 438 décrit une structure d'exosquelette (100) de jambe comprenant un mécanisme (120) formé d'une pluralité d'éléments de support (121a-i). Le mécanisme comprend un actionneur (142) permettant de faire tourner un élément de support par rapport à un autre selon un degré de liberté correspondant à un mouvement de rotation interne/externe du pied de l'utilisateur.

Le document US 2017/0360645 décrit une structure s'exosquelette (1) comprenant une pièce de jambe (3) et une pièce de pied (4) reliée à la pièce de jambe par un mécanisme (6). Le mécanisme comprend un pivot (17a) autorisant un mouvement d'inversion/éversion de la cheville de l'utilisateur, et un pivot (17b) autorisant un mouvement de flexion/extension de la cheville de l'utilisateur.

### RESUME DE L'INVENTION

Un but de l'invention est de proposer une structure d'exosquelette qui soit plus confortable et qui entrave le moins possible les mouvements de l'utilisateur.

Ce but est atteint dans le cadre de la présente invention grâce à une structure d'exosquelette comprenant :
- une pièce de jambe destinée à être fixée à une jambe d'un utilisateur,
- une pièce de pied destinée à être fixée à un pied d'un utilisateur,
- un ensemble mécanique de liaison reliant la pièce de jambe à la pièce de pied, comprenant un premier pivot autorisant une rotation de la pièce de pied par rapport à la pièce de jambe autour d'un premier axe de rotation lors d'un mouvement de rotation interne/externe du pied de l'utilisateur, et un deuxième pivot autorisant une rotation de la pièce de pied par rapport à la pièce de jambe autour d'un deuxième axe de rotation lors d'un mouvement d'éversion/inversion de la cheville de l'utilisateur,

le premier pivot étant agencé de sorte que le premier pivot est disposé d'un côté de la pièce de jambe, la pièce de jambe se trouvant entre un plan sagittal de l'utilisateur et le premier pivot, le premier pivot étant de plus situé à une hauteur supérieure ou égale à 20 centimètres par rapport au sol lorsque l'utilisateur se tient debout sur le sol, en position anatomique de référence, le premier axe de rotation étant orienté de sorte que la distance entre le premier axe de rotation et le deuxième axe de rotation est inférieure ou égale à 5 centimètres,
et le premier axe de rotation (X1) étant orienté de sorte qu'il forme un premier angle non-nul par rapport à une direction verticale lorsque l'utilisateur se tient debout, en position anatomique de référence, ledit premier angle étant compris entre 1 et 30 degrés.

On rappelle qu'une « distance entre deux axes » est définie comme la plus petite distance qui sépare deux points situés respectivement sur chacun des deux axes.

L'invention est basée sur le constat qu'en positionnant le premier pivot suffisamment loin de la cheville de l'utilisateur (c'est-à-dire à une certaine hauteur par rapport au sol), il est possible d'agencer le premier axe de rotation de sorte que celui-ci soit le plus proche possible du centre de rotation réel de la cheville. En particulier, le premier axe de rotation peut être disposé de sorte à être suffisamment proche du deuxième axe de rotation (c'est-à-dire à une distance entre les axes inférieure ou égale à 5 centimètres) de manière à reproduire le plus fidèlement possible les degrés de liberté de la cheville et ainsi obtenir une structure d'exosquelette plus confortable.

En outre, le premier pivot est disposé d'un côté de la pièce de jambe de sorte que la pièce de jambe se trouve entre un plan sagittal de l'utilisateur et le premier pivot.

Cette disposition du premier pivot permet de libérer l'espace se trouvant devant le tibia de l'utilisateur, ainsi que l'espace interne de la jambe. De cette manière, la structure d'exosquelette peut être enfilée et retirée plus facilement. En outre, cela limite les risques d'interférence entre la structure d'exosquelette et l'autre pied de l'utilisateur lors de la marche.

Par ailleurs, cette disposition autorise une conception plus légère et moins encombrante des différentes pièces de la structure.

Dans un mode préféré de réalisation de l'invention, le premier axe de rotation est orienté de sorte qu'il coupe le deuxième axe de rotation (c'est-à-dire que la distance entre les axes est nulle). Le premier axe de rotation et le deuxième axe de rotation étant concourants, ils permettent de préserver les degrés de liberté de la cheville.

La structure d'exosquelette proposée peut en outre présenter les caractéristiques suivantes :
- ledit premier angle est compris entre 10 et 15 degrés, par exemple égal à 12 degrés,
- l'ensemble mécanique de liaison comprend un troisième pivot autorisant une rotation de la pièce de pied par rapport à la pièce de jambe autour d'un troisième axe de rotation lors d'un mouvement de flexion/extension de la cheville de l'utilisateur,
- le troisième pivot est disposé à une hauteur inférieure à la hauteur de la malléole de l'utilisateur lorsque l'utilisateur se tient debout, en position anatomique de référence,
- le troisième pivot est disposé vers l'arrière du pied de l'utilisateur par rapport à la malléole de l'utilisateur,
- le premier axe de rotation est orienté de sorte que la distance entre le premier axe de rotation et le troisième axe de rotation est inférieure ou égale à 5 centimètres,
- le premier axe de rotation est orienté de sorte qu'il coupe le troisième axe de rotation,
- le troisième axe de rotation est orienté de sorte qu'il forme un deuxième angle non-nul avec un plan frontal de l'utilisateur lorsque l'utilisateur se trouve debout, en position anatomique de référence, le deuxième angle étant compris entre 1 et 15 degrés, de préférence entre 4 et 7 degrés, par exemple égal à 6 degrés,
- le troisième axe de rotation est orienté de sorte qu'il forme un troisième angle non-nul avec un plan transverse de l'utilisateur lorsque l'utilisateur se trouve debout, en position anatomique de référence, l'angle étant compris entre 5 et 15 degrés, de préférence entre 6 et 8 degrés, par exemple égal à 8 degrés.
- l'ensemble mécanique de liaison comprend une pièce de liaison présentant une première extrémité reliée à la pièce de jambe via le premier pivot et une deuxième extrémité reliée au troisième pivot, la pièce de liaison comprenant deux parties montées coulissantes l'une par rapport à l'autre afin de régler une longueur de la pièce de liaison, et un dispositif de verrouillage pour verrouiller les deux parties l'une par rapport à l'autre une fois la longueur réglée,
- le deuxième axe de rotation est orienté de sorte qu'il forme un quatrième angle non-nul par rapport à une direction horizontale lorsque l'utilisateur se trouve debout, en position anatomique de référence, l'angle étant compris entre 1 et 30 degrés, de préférence entre 15 et 25 degrés, par exemple 18 degrés,
- le deuxième axe de rotation est orienté de sorte qu'il passe en dessous de la malléole de l'utilisateur lorsque l'utilisateur se trouve debout, en position anatomique de référence,
- le deuxième axe de rotation est orienté en descendant lorsqu'on parcourt le deuxième axe de rotation depuis l'arrière du pied vers l'avant du pied de l'utilisateur, lorsque l'utilisateur se trouve debout, en position anatomique de référence.

### PRESENTATION DES DESSINS

D'autres caractéristiques et avantages ressortiront encore de la description qui suit, laquelle est purement illustrative et non limitative, et doit être lue en regard des figures annexées, parmi lesquelles :
- la figure 1 représente de manière schématique, en vue de face, un utilisateur équipé d'une structure d'exosquelette conforme à un mode de réalisation de l'invention,
- la figure 2 représente de manière schématique, en vue de dos, une partie de la structure d'exosquelette de la figure 1,
- la figure 3 représente de manière schématique, en vue de dos, une partie de la structure d'exosquelette de la figure 1,
- la figure 4 représente de manière schématique, en vue de dessus, une partie de la structure d'exosquelette de la figure 1, et
- la figure 5 représente de manière schématique, en vue de côté, une partie de la structure d'exosquelette de la figure 1.

### DESCRIPTION DETAILLEE D'UN MODE DE REALISATION

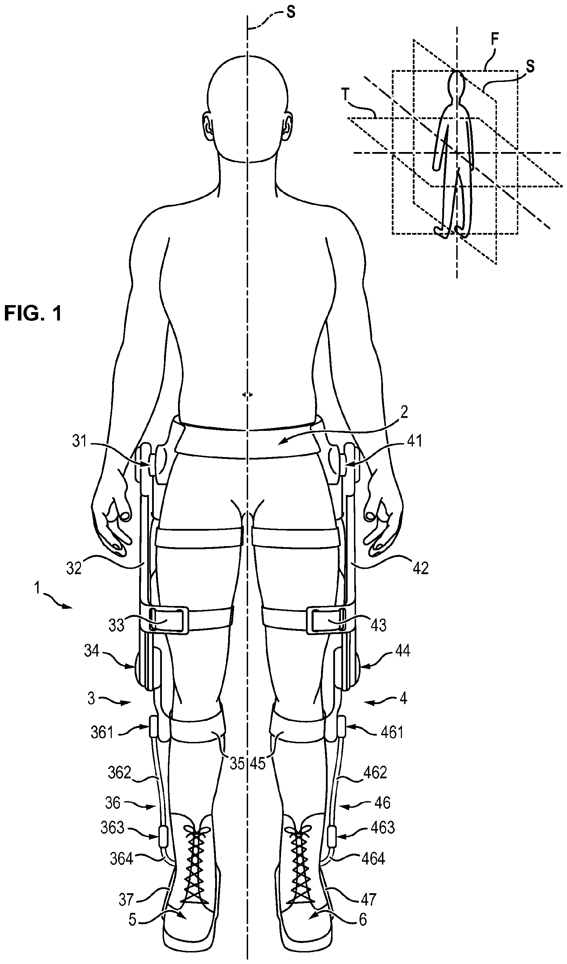

La figure 1 représente de manière schématique un utilisateur se tenant debout sur un sol horizontal, en position anatomique de référence (également appelée « position de référence » ou « position anatomique standard ») selon le système de référence en anatomie.

La figure 1 inclut par ailleurs un diagramme illustrant un plan frontal F, un plan sagittal S et un plan transverse T de l'utilisateur. De manière connue, le plan sagittal S est défini comme un plan parallèle au plan médian qui sépare la moitié gauche de la moitié droite du corps de l'utilisateur. Le plan frontal F ou plan coronal est défini comme un plan perpendiculaire au plan médian et qui sépare le corps en une partie antérieure ou ventrale et une partie postérieure ou dorsale. Le plan transverse T ou plan transversal est défini comme un plan perpendiculaire au plan médian et qui sépare le corps en une partie supérieure (du côté de la tête) et une partie inférieure (du côté des pieds).

Sur la figure 1, l'utilisateur est équipé d'une structure d'exosquelette 1 d'assistance à l'effort, pour assister l'utilisateur lors de mouvements de ses membres inférieurs.

La structure d'exosquelette 1 illustrée sur la figure 1 comprend une ceinture lombaire 2 propre à entourer la taille de l'utilisateur, un premier ensemble de membre inférieur 3 et un deuxième ensemble de membre inférieur 4.

La ceinture lombaire 2 est disposée autour de la taille de l'utilisateur, en appui sur les hanches de l'utilisateur. La ceinture lombaire 2 peut supporter une batterie et une unité de commande (non représentées) fixées à la ceinture lombaire. La batterie permet d'alimenter les différents actionneurs de la structure en énergie électrique. L'unité de commande est programmée pour commander les différents actionneurs.

Le premier ensemble de membre inférieur 3 s'étend le long d'un premier membre inférieur de l'utilisateur (dans l'exemple de la figure 1, le premier ensemble de membre inférieur s'étend le long du membre inférieur droit de l'utilisateur) et est raccordé à la ceinture lombaire 2 par le biais d'un premier pivot de hanche 31 (situé à la droite de l'utilisateur).

Le premier ensemble de membre inférieur 3 comprend le premier pivot de hanche 31, une première pièce fémorale 32 propre à s'étendre le long de la cuisse droite de l'utilisateur, une première pièce de cuisse 33 propre à être fixée à la cuisse droite de l'utilisateur, un premier pivot de genou 34, une première pièce de jambe 35 propre à être fixée à la jambe droite de l'utilisateur, un premier ensemble mécanique de liaison 36 et une première pièce de pied 37 propre à être fixée au pied droit de l'utilisateur.

Le premier pivot de hanche 31 autorise une rotation de la première pièce fémorale 32 par rapport à la ceinture lombaire 2 lors d'un mouvement de flexion/extension de la cuisse droite de l'utilisateur par rapport au bassin.

Le premier ensemble de membre inférieur 3 peut en outre comprendre, intégré au premier pivot de hanche 31, un actionneur de hanche comprenant un stator et un rotor propre à être entrainé en rotation par rapport au stator pour entrainer en rotation la pièce tibiale 32 par rapport à la ceinture lombaire 2 lors d'un mouvement de flexion ou d'extension de l'articulation de la hanche droite.

Le premier pivot de genou 34 relie la première pièce fémorale 32 à la première pièce de jambe 35. Le pivot de genou 34 autorise une rotation de la pièce de jambe 35 par rapport à la pièce fémorale 32 lors d'un mouvement de flexion/extension de l'articulation du genou droit.

Le premier ensemble de membre inférieur 3 peut en outre comprendre, intégré au premier pivot de genou 34, un actionneur de genou comprenant un stator et un rotor propre à être entrainé en rotation par rapport au stator pour entrainer en rotation la pièce de jambe 35 par rapport à la pièce fémorale 32 lors d'un mouvement de flexion ou d'extension de l'articulation de genou droit.

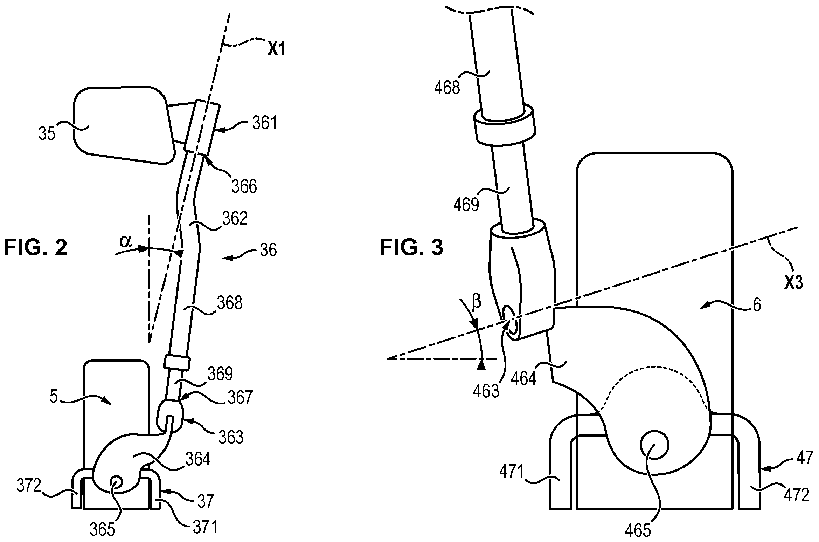

Comme illustré sur la figure 2, le premier ensemble de liaison 36 comprend un pivot 361, une pièce tibiale 362, un pivot 363, une pièce intermédiaire 364 et un pivot 365.

La pièce tibiale 362 s'étend le long du mollet de l'utilisateur, entre la pièce de jambe 35 et la pièce intermédiaire 364. La pièce tibiale 362 présente une première extrémité 366 et une deuxième extrémité 367.

La pièce de jambe 35 est reliée à la pièce tibiale 362 par l'intermédiaire du pivot 361. Plus précisément, la pièce de jambe 35 est reliée à la première extrémité 366 de la pièce tibiale 362 par le biais du pivot 361. Le pivot 361 autorise une rotation de la pièce tibiale 362 par rapport à la pièce de jambe 35 autour d'un axe de rotation X1, lors d'un mouvement de rotation interne/externe du pied de l'utilisateur par rapport à la jambe.

La pièce intermédiaire 364 s'étend entre la pièce tibiale 362 et la pièce de pied 37. La pièce intermédiaire 364 est reliée à la pièce tibiale 362 par le biais du pivot 363. Plus précisément, la pièce intermédiaire 364 est reliée à la deuxième extrémité 367 de la pièce tibiale 362 par le biais du pivot 363. Le pivot 363 autorise une rotation de la pièce intermédiaire 364 par rapport à la pièce tibiale 362 autour d'un axe de rotation X3, lors d'un mouvement de rotation en flexion/extension du pied de l'utilisateur par rapport à la jambe.

La pièce intermédiaire 364 est reliée à la pièce de pied 37 par le biais du pivot 365. Le pivot 365 est disposé à l'arrière du pied de l'utilisateur, c'est-à-dire derrière le talon. Le pivot 365 autorise une rotation de la pièce de pied 37 par rapport à la pièce intermédiaire 364 autour d'un axe de rotation X2, lors d'un mouvement de pronation/supination du pied de l'utilisateur par rapport à la jambe.

La pièce de pied 37 est propre à être fixée au pied de l'utilisateur. Plus précisément, la pièce de pied 37 est propre à être fixée à une chaussure droite 5 de l'utilisateur, par exemple à la semelle, de manière à transférer les efforts s'exerçant sur la structure d'exosquelette 1 vers le sol via la chaussure 5.

La pièce de pied 37 présente deux branches 371 et 372, propres à s'étendre de part et d'autre de la semelle de la chaussure 5. Chaque branche 371, 372 de la pièce de pied 37 est fixée à la semelle, par exemple au moyen d'une ou plusieurs tiges de fixation pénétrant dans l'épaisseur de la semelle.

La pièce tibiale 362 peut être formée en deux parties 368, 369 montées coulissantes l'une par rapport à l'autre par le biais d'une glissière. Le coulissement des parties 368 et 369 l'une par rapport à l'autre autorise un raccourcissement ou un allongement de la pièce tibiale 362 permettant d'ajuster la longueur de la pièce tibiale 362 en fonction de la morphologie de l'utilisateur. La pièce tibiale 362 peut également comprendre un dispositif de verrouillage permettant de verrouiller la pièce tibiale à la longueur désirée.

Comme cela est visible sur la figure 1, le pivot 361 est disposé d'un côté de la pièce de jambe 35 de sorte que la pièce de jambe 35 se trouve entre un plan sagittal S de l'utilisateur et le pivot 361.

En outre, le pivot 363 est disposé d'un côté du pied de l'utilisateur, à proximité de la malléole. Plus précisément, le pivot 363 est disposé d'un côté de la pièce intermédiaire 364, de sorte que la pièce intermédiaire 364 se trouve entre le plan sagittal S de l'utilisateur et le pivot 363.

Il en résulte que la pièce tibiale 362 s'étend sur le côté externe de la jambe d'utilisateur (et non pas devant le tibia). Cela permet de concevoir une structure d'exosquelette 1 légère. De plus, la structure d'exosquelette 1 est plus facile à enfiler et à retirer. Il suffit à l'utilisateur d'enfiler ou de retirer sa chaussure, comme il le ferait normalement, sans présence de la structure d'exosquelette 1. Par ailleurs, cela permet de dégager l'espace entourant la cheville, et en particulier l'espace situé du côté interne de la cheville, de manière à limiter les interférences entre les deux ensembles de jambe.

Comme illustré sur la figure 1, le deuxième ensemble de membre inférieur 4 est symétrique du premier ensemble de membre inférieur 3. Le deuxième ensemble de membre inférieur 4 est également raccordé à la ceinture lombaire 2 par le biais d'un deuxième pivot de hanche 41, symétrique du premier pivot de hanche 31. Le deuxième ensemble de membre inférieur 4 s'étend le long d'un deuxième membre inférieur de l'utilisateur (dans l'exemple de la figure 1, le deuxième ensemble de membre inférieur s'étend le long du membre inférieur gauche de l'utilisateur).

Le deuxième ensemble de membre inférieur 4 comprend des pièces identiques à celles du premier ensemble de membre inférieur 3, mais agencées de manière symétrique par rapport au plan sagittal S de l'utilisateur.

Ainsi, le deuxième ensemble de membre inférieur 4 comprend le deuxième pivot de hanche 41, une deuxième pièce fémorale 42 propre à s'étendre le long de la cuisse gauche de l'utilisateur, une deuxième pièce de cuisse 43 propre à être fixée à la cuisse gauche de l'utilisateur, un deuxième pivot de genou 44, une deuxième pièce de jambe 45 propre à être fixée à la jambe gauche de l'utilisateur, un deuxième ensemble mécanique de liaison 46 et une deuxième pièce de pied 47 propre à être fixée au pied gauche de l'utilisateur.

Le deuxième pivot de hanche 41 autorise une rotation de la deuxième pièce fémorale 42 par rapport à la ceinture lombaire 2 lors d'un mouvement de flexion/extension de la cuisse gauche de l'utilisateur par rapport au bassin.

Le deuxième ensemble de membre inférieur 4 peut en outre comprendre un actionneur de hanche, intégré au pivot de hanche 41, comprenant un stator et un rotor propre à être entrainé en rotation par rapport au stator pour entrainer en rotation la pièce tibiale 42 par rapport à la ceinture lombaire 2 lors d'un mouvement de flexion ou d'extension de la hanche.

Le deuxième pivot de genou 44 relie la deuxième pièce fémorale 42 à la deuxième pièce de jambe 45. Le pivot de genou 44 autorise une rotation de la pièce de jambe 45 par rapport à la pièce fémorale 42 lors d'un mouvement de flexion/extension de la jambe de l'utilisateur par rapport à la cuisse.

Le deuxième ensemble de membre inférieur 4 peut en outre comprendre un actionneur de genou, intégré au deuxième pivot de genou 44, comprenant un stator et un rotor propre à être entrainé en rotation par rapport au stator pour entrainer en rotation la pièce de jambe 45 par rapport à la pièce fémorale 42 lors d'un mouvement de flexion ou d'extension du genou.

Comme illustré sur la figure 3, le deuxième ensemble de liaison 46 comprend un premier pivot 461, une pièce tibiale 462, un deuxième pivot 463, une pièce intermédiaire 464 et un troisième pivot 465.

La pièce tibiale 462 peut être formée en deux parties 468, 469 montées coulissantes l'une par rapport à l'autre par le biais d'une glissière. Le coulissement des parties 468 et 469 l'une par rapport à l'autre autorise un raccourcissement ou un allongement de la pièce tibiale 462 permettant d'ajuster la longueur de la pièce tibiale 362 en fonction de la morphologie de l'utilisateur. La pièce tibiale 462 peut également comprendre un dispositif de verrouillage permettant de verrouiller la pièce tibiale à la longueur désirée.

Le deuxième ensemble de liaison 46 est agencé de manière symétrique du premier ensemble de liaison 36, par rapport au plan sagittal S.

En particulier, comme cela est visible sur la figure 1, le premier pivot 461 est disposé d'un côté de la pièce de jambe 45 de sorte que la pièce de jambe 45 se trouve entre un plan sagittal S de l'utilisateur et le premier pivot 461.

En outre, le deuxième pivot 463 est disposé d'un côté du pied de l'utilisateur, à proximité de la malléole. Plus précisément, le deuxième pivot 463 est disposé d'un côté de la pièce intermédiaire 464, de sorte que la pièce intermédiaire 464 se trouve entre le plan sagittal S de l'utilisateur et le deuxième pivot 463.

Il en résulte que la pièce tibiale 462 s'étend sur le côté externe de la jambe d'utilisateur (et non pas devant le tibia).

Comme illustré sur la figure 2, l'axe de rotation X1 du pivot 361 est orienté de sorte qu'il forme un premier angle α non-nul par rapport une direction verticale lorsque l'utilisateur se trouve debout, en position anatomique de référence. Le premier angle α est compris entre 1 et 30 degrés, de préférence entre 10 et 15 degrés, par exemple environ 12 degrés.

De la même manière, l'axe de rotation X1 du pivot 461 est également orienté de de sorte qu'il forme le même premier angle α non-nul par rapport une direction verticale lorsque l'utilisateur se trouve debout, en position anatomique de référence.

Par ailleurs, comme illustré sur les figures 2 et 3, le pivot 363 du premier ensemble de liaison 3 et le pivot 463 du deuxième ensemble de liaison 46 sont disposés à une hauteur inférieure à la hauteur des malléoles de l'utilisateur lorsque l'utilisateur se tient debout.

L'axe de rotation X3 est orienté de sorte qu'il forme un angle β non-nul avec un plan transverse T de l'utilisateur lorsque l'utilisateur se trouve debout, en position anatomique de référence, l'angle étant compris entre 5 et 15 degrés, de préférence entre 6 et 8 degrés, par exemple environ 8 degrés.

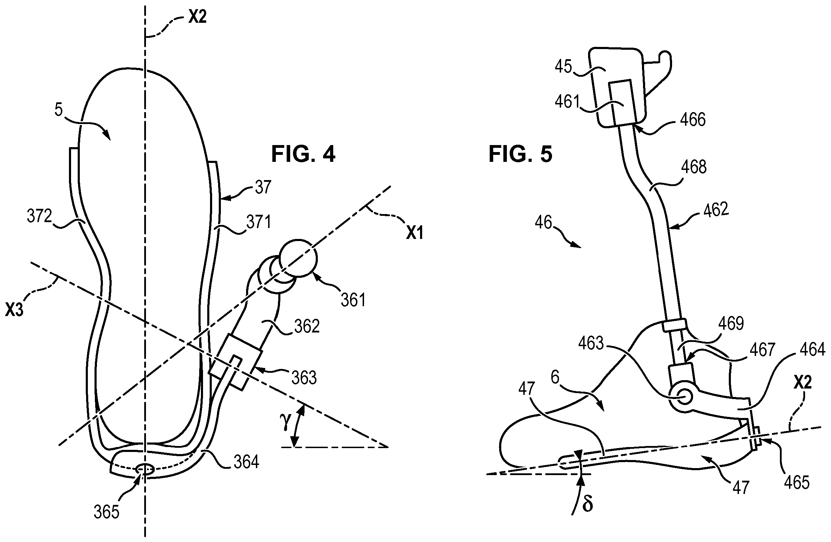

En outre comme illustré sur la figure 4, le pivot 363 du premier ensemble de liaison 36 est disposé vers l'arrière du pied de l'utilisateur par rapport à la malléole de l'utilisateur. Cette disposition permet de minimiser les dimensions de la pièce intermédiaire et par conséquent de rendre la structure d'exosquelette plus légère.

Le pivot 463 du deuxième ensemble de liaison 46 présente une disposition symétrique de celle du pivot 363 du premier ensemble de liaison 36 par rapport au plan sagittal.

De plus, l'axe de rotation X3 est orienté de sorte qu'il forme un angle γ non-nul avec un plan frontal F de l'utilisateur lorsque l'utilisateur se trouve debout, en position anatomique de référence, l'angle étant compris entre 1 et 15 degrés, de préférence entre 4 et 7 degrés, par exemple environ 6 degrés.

L'axe de rotation X3 passe au-dessus de l'axe de rotation X2, sans que les axes de rotations X3 et X2 ne se coupent.

En revanche, comme illustré sur la figure 4, aussi bien dans le premier ensemble de liaison 36 que dans le deuxième ensemble de liaison 46, l'axe de rotation X1 coupe l'axe de rotation X2.

Comme illustré sur la figure 5, l'axe de rotation X2 est orienté selon un angle δ non-nul avec un plan transverse T de l'utilisateur lorsque l'utilisateur se trouve debout, en position anatomique de référence, l'angle étant compris entre 1 et 30 degrés, de préférence entre 15 et 25 degrés, par exemple environ 18 degrés.

L'axe de rotation X2 est orienté en descendant lorsqu'on parcourt l'axe de rotation X2 depuis l'arrière du pied vers l'avant du pied. Cette configuration a pour avantage de procurer une stabilité renforcée de la structure d'exosquelette 1, même lorsque l'utilisateur marche sur un terrain irrégulier, c'est-à-dire un terrain présentant des rugosités. En effet, si l'utilisateur pose son pied sur une rugosité, le point d'application de la force de réaction produite par la rugosité sur la semelle de la chaussure 6 se trouvera nécessairement au-dessus de l'axe X2 pronation/supination, de sorte que le moment résultant aura tendance à limiter la rotation imposée à la cheville de l'utilisateur. (A contrario, dans une structure où l'axe de rotation X2 se trouverait au-dessus du point d'application de la force de réaction produite par la rugosité sur la semelle de la chaussure 6 produirait un moment résultant qui aurait tendance à accentuer la rotation imposée à la cheville de l'utilisateur.)

## Revendications

1. Structure d'exosquelette (1) comprenant :
- une pièce de jambe (35, 45) destinée à être fixée à une jambe d'un utilisateur,
- une pièce de pied (37, 47) destinée à être fixée à un pied d'un utilisateur,
- un ensemble mécanique de liaison (36, 46) reliant la pièce de jambe (35, 45) à la pièce de pied (37, 47), comprenant un premier pivot (361, 461) autorisant une rotation de la pièce de pied (37, 47) par rapport à la pièce de jambe (35, 45) autour d'un premier axe de rotation (X1) lors d'un mouvement de rotation interne/externe du pied de l'utilisateur, et un deuxième pivot (365, 465) autorisant une rotation de la pièce de pied (37, 47) par rapport à la pièce de jambe (35, 45) autour d'un deuxième axe de rotation (X2) lors d'un mouvement d'éversion/inversion de la cheville de l'utilisateur,
le premier pivot (361, 461) étant agencé de sorte que le premier pivot (361, 461) est disposé d'un côté de la pièce de jambe (35, 45), la pièce de jambe (35, 45) se trouvant entre un plan sagittal de l'utilisateur et le premier pivot (361, 461), le premier pivot (361, 461) étant de plus situé à une hauteur supérieure ou égale à 20 centimètres par rapport au sol lorsque l'utilisateur se tient debout, en position anatomique de référence, le premier axe de rotation (X1) étant orienté de sorte que la distance entre le premier axe de rotation (X1) et le deuxième axe de rotation (X2) est inférieure ou égale à 5 centimètres, et
le premier axe de rotation (X1) étant orienté de sorte qu'il forme un premier angle (α) non-nul par rapport à une direction verticale lorsque l'utilisateur se tient debout, en position anatomique de référence, ledit premier angle étant compris entre 1 et 30 degrés.

2. Structure d'exosquelette selon la revendication 1, dans laquelle le premier axe de rotation (X1) est orienté de sorte qu'il coupe le deuxième axe de rotation (X2).

3. Structure d'exosquelette selon l'une des revendications 1 et 2, dans laquelle ledit premier angle est compris entre 10 et 15 degrés, par exemple égal à 12 degrés.

4. Structure d'exosquelette selon l'une des revendications 1 à 3, dans laquelle l'ensemble mécanique de liaison (36, 46) comprend un troisième pivot (363, 463) autorisant une rotation de la pièce de pied (37, 47) par rapport à la pièce de jambe (35, 45) autour d'un troisième axe de rotation (X3) lors d'un mouvement de flexion/extension de la cheville de l'utilisateur.

5. Structure d'exosquelette selon la revendication 4, dans laquelle le troisième pivot (363, 463) est disposé à une hauteur inférieure à la hauteur de la malléole de l'utilisateur lorsque l'utilisateur se tient debout, en position anatomique de référence.

6. Structure d'exosquelette selon l'une des revendications 4 et 5, dans laquelle le troisième pivot (363, 463) est disposé vers l'arrière du pied de l'utilisateur par rapport à la malléole de l'utilisateur.

7. Structure d'exosquelette selon l'une des revendications 4 à 6, dans laquelle le premier axe de rotation (X1) est orienté de sorte que la distance entre le premier axe de rotation (X1) et le troisième axe de rotation (X3) est inférieure ou égale à 5 centimètres.

8. Structure d'exosquelette selon l'une des revendications 4 à 7, dans laquelle le premier axe de rotation (X1) est orienté de sorte qu'il coupe le troisième axe de rotation (X3).

9. Structure d'exosquelette selon l'une des revendications 4 à 8, dans laquelle le troisième axe de rotation (X3) est orienté de sorte qu'il forme un deuxième angle (γ) non-nul avec un plan frontal de l'utilisateur lorsque l'utilisateur se trouve debout, en position anatomique de référence, le deuxième angle étant compris entre 1 et 15 degrés, de préférence entre 4 et 7 degrés, par exemple égal à 6 degrés.

10. Structure d'exosquelette selon l'une des revendications 4 à 9, dans laquelle le troisième axe de rotation (X3) est orienté de sorte qu'il forme un troisième angle (β) non-nul avec un plan transverse de l'utilisateur lorsque l'utilisateur se trouve debout, en position anatomique de référence, l'angle étant compris entre 5 et 15 degrés, de préférence entre 6 et 8 degrés, par exemple égal à 8 degrés.

11. Structure d'exosquelette selon l'une des revendications 4 à 10, dans laquelle l'ensemble mécanique de liaison (36, 46) comprend une pièce de liaison (362, 462) présentant une première extrémité (366, 466) reliée à la pièce de jambe (35, 45) via le premier pivot (361, 461) et une deuxième extrémité (367, 467) reliée au troisième pivot (363, 463), la pièce de liaison (362, 462) comprenant deux parties (368, 369, 468, 469) montées coulissantes l'une par rapport à l'autre afin de régler une longueur de la pièce de liaison (362, 462), et un dispositif de verrouillage pour verrouiller les deux parties (368, 369, 468, 469) l'une par rapport à l'autre une fois la longueur réglée.

12. Structure d'exosquelette selon l'une des revendications 1 à 11, dans laquelle le deuxième axe de rotation (X2) est orienté de sorte qu'il forme un quatrième angle (δ) non-nul par rapport à une direction horizontale lorsque l'utilisateur se trouve debout, en position anatomique de référence, l'angle étant compris entre 1 et 30 degrés, de préférence entre 15 et 25 degrés, par exemple 18 degrés.

13. Structure d'exosquelette selon l'une des revendications 1 à 12, dans laquelle le deuxième axe de rotation (X2) est orienté de sorte qu'il passe en dessous de la malléole de l'utilisateur lorsque l'utilisateur se trouve debout, en position anatomique de référence.

14. Structure d'exosquelette selon l'une des revendications 1 à 13, dans laquelle le deuxième axe de rotation (X2) est orienté en descendant lorsqu'on parcourt le deuxième axe de rotation (X2) depuis l'arrière du pied vers l'avant du pied de l'utilisateur, lorsque l'utilisateur se trouve debout, en position anatomique de référence.

## Patentansprüche

1. Exoskelettstruktur (1), umfassend:
- ein Beinteil (35, 45), das zur Befestigung an einem Bein eines Benutzers bestimmt ist,
- ein Fußteil (37, 47), das zur Befestigung an einem Fuß eines Benutzers bestimmt ist,
- eine mechanische Verbindungsanordnung (36, 46), die das Beinteil (35, 45) mit dem Fußteil (37, 47) verbindet, umfassend einen ersten Drehzapfen (361, 461), der eine Rotation des Fußteils (37, 47) im Verhältnis zum Beinteil (35, 45) um eine erste Drehachse (X1) bei einer Innen-/Außendrehbewegung des Fußes des Benutzers gestattet, und einen zweiten Drehzapfen (365, 465), der eine Drehung des Fußteils (37, 47) im Verhältnis zum Beinteil (35, 45) um eine zweite Drehachse (X2) bei einer Auswärts-/Einwärtsbewegung des Sprunggelenks des Benutzers gestattet,
wobei der erste Drehzapfen (361, 461) derart eingerichtet ist, dass der erste Drehzapfen (361, 461) auf einer Seite des Beinteils (35, 45) angeordnet ist, wobei sich das Beinteil (35, 45) zwischen einer sagittalen Ebene des Benutzers und dem ersten Drehzapfen (361, 461) befindet, wobei sich der erste Drehzapfen (361, 461) darüber hinaus auf einer Höhe befindet, die größer oder gleich 20 Zentimeter im Verhältnis zum Boden liegt, wenn sich der Benutzer aufrecht in anatomischer Referenzposition befindet, wobei die erste Drehachse (X1) derart ausgerichtet ist, dass der Abstand zwischen der ersten Drehachse (X1) und der zweiten Drehachse (X2) kleiner oder gleich 5 Zentimeter ist, und
wobei die erste Drehachse (X1) derart ausgerichtet ist, dass sie einen ersten Winkel (α) ungleich null im Verhältnis zu einer vertikalen Richtung bildet, wenn sich der Benutzer aufrecht in anatomischer Referenzposition befindet, wobei der erste Winkel zwischen 1 und 30 Grad liegt.

2. Exoskelettstruktur nach Anspruch 1, wobei die erste Drehachse (X1) derart ausgerichtet ist, dass sie die zweite Drehachse (X2) schneidet.

3. Exoskelettstruktur nach einem der Ansprüche 1 und 2, wobei der erste Winkel zwischen 10 und 15 Grad, beispielsweise bei gleich 12 Grad liegt.

4. Exoskelettstruktur nach einem der Ansprüche 1 bis 3, wobei die mechanische Verbindungsanordnung (36, 46) einen dritten Drehzapfen (363, 463) umfasst, der eine Drehung des Fußteils (37, 47) im Verhältnis zum Beinteil (35, 45) um eine dritte Drehachse (X3) bei einer Beuge-/Streckbewegung des Sprunggelenks des Benutzers gestattet.

5. Exoskelettstruktur nach Anspruch 4, wobei der dritte Drehzapfen (363, 463) in einer Höhe angeordnet ist, die kleiner als die Höhe des Knöchels des Benutzers ist, wenn sich der Benutzer aufrecht in anatomischer Referenzposition befindet.

6. Exoskelettstruktur nach einem der Ansprüche 4 und 5, wobei der dritte Drehzapfen (363, 463) hinter dem Fuß des Benutzers im Verhältnis zum Knöchel des Benutzers angeordnet ist.

7. Exoskelettstruktur nach einem der Ansprüche 4 bis 6, wobei die erste Drehachse (X1) derart ausgerichtet ist, dass der Abstand zwischen der ersten Drehachse (X1) und der dritten Drehachse (X3) kleiner oder gleich 5 Zentimeter ist.

8. Exoskelettstruktur nach einem der Ansprüche 4 bis 7, wobei die erste Drehachse (X1) derart ausgerichtet ist, dass sie die dritte Drehachse (X3) schneidet.

9. Exoskelettstruktur nach einem der Ansprüche 4 bis 8, wobei die dritte Drehachse (X3) derart ausgerichtet ist, dass sie einen zweiten Winkel (γ) ungleich null mit einer frontalen Ebene des Benutzers bildet, wenn sich der Benutzer aufrecht in anatomischer Referenzposition befindet, wobei der zweite Winkel zwischen 1 und 15 Grad, vorzugsweise zwischen 4 und 7 Grad, beispielsweise bei gleich 6 Grad liegt.

10. Exoskelettstruktur nach einem der Ansprüche 4 bis 9, wobei die dritte Drehachse (X3) derart ausgerichtet ist, dass sie einen dritten Winkel (β) ungleich null mit einer transversalen Ebene des Benutzers bildet, wenn sich der Benutzer aufrecht in anatomischer Referenzposition befindet, wobei der Winkel zwischen 5 und 15 Grad, vorzugsweise zwischen 6 und 8 Grad, beispielsweise bei gleich 8 Grad liegt.

11. Exoskelettstruktur nach einem der Ansprüche 4 bis 10, wobei die mechanische Verbindungsanordnung (36, 46) ein Verbindungsteil (362, 462) umfasst, das ein erstes Ende (366, 466) aufweist, das mit dem Beinteil (35, 45) über den ersten Drehzapfen (361, 461) verbunden ist, und ein zweites Ende (367, 467), das mit dem dritten Drehzapfen (363, 463) verbunden ist, wobei das Verbindungsteil (362, 462) zwei Abschnitte (368, 369, 468, 469) umfasst, die im Verhältnis zueinander gleitend angebracht sind, um eine Länge des Verbindungsteils (362, 462) einzustellen, und eine Verriegelungsvorrichtung, um die zwei Abschnitte (368, 369, 468, 469) im Verhältnis zueinander zu verriegeln, sobald die Länge eingestellt ist.

12. Exoskelettstruktur nach einem der Ansprüche 1 bis 11, wobei die zweite Drehachse (X2) derart ausgerichtet ist, dass sie einen vierten Winkel (δ) ungleich null im Verhältnis zu einer horizontalen Richtung bildet, wenn sich der Benutzer aufrecht in anatomischer Referenzposition befindet, wobei der Winkel zwischen 1 und 30 Grad, vorzugsweise zwischen 15 und 25 Grad, beispielsweise bei 18 Grad liegt.

13. Exoskelettstruktur nach einem der Ansprüche 1 bis 12, wobei die zweite Drehachse (X2) derart ausgerichtet ist, dass sie unter dem Knöchel des Benutzers verläuft, wenn sich der Benutzer aufrecht in anatomischer Referenzposition befindet.

14. Exoskelettstruktur nach einem der Ansprüche 1 bis 13, wobei die zweite Drehachse (X2) abwärts ausgerichtet ist, wenn man die zweite Drehachse (X2) ab der Rückseite des Fußes zur Vorderseite des Fußes des Benutzers verfolgt, wenn sich der Benutzer aufrecht in anatomischer Referenzposition befindet.

## Claims

1. An exoskeleton structure (1) comprising:
- a leg part (35, 45) intended to be fastened to a leg of a user,
- a foot part (37, 47) intended to be fastened to a foot of a user,
- a mechanical linking assembly (36, 46) connecting the leg part (35, 45) to the foot part (37, 47), comprising a first pivot (361, 461) allowing rotation of the foot part (37, 47) relative to the leg part (35, 45) around a first axis of rotation (X1) during an internal/external rotation movement of the foot of the user, and a second pivot (365, 465) allowing rotation of the foot part (37, 47) relative to the leg part (35, 45) around a second axis of rotation (X2) during an eversion/inversion movement of the ankle of the user,
the first pivot (361, 461) being arranged so that the first pivot (361, 461) is positioned on one side of the leg part (35, 45), the leg part (35, 45) being located between a sagittal plane of the user and the first pivot (361, 461), the first pivot (361, 461) being in addition positioned at a height greater than or equal to 20 centimeters from the ground when the user is standing, in the anatomical reference position, the first axis of rotation (X1) being oriented so that the distance between the first axis of rotation (X1) and the second axis of rotation (X2) is less than or equal to 5 centimeters, and
the first axis of rotation (X1) being oriented so that it forms a first nonzero angle (α) relative to a vertical direction when the user is standing, in the anatomical reference position, said first angle being comprised between 1 and 30 degrees.

2. The exoskeleton structure according to claim 1, wherein the first axis of rotation (X1) is oriented so that it intersects the second axis of rotation (X2).

3. The exoskeleton structure according to one of claims 1 and 2, wherein said first angle is comprised between 10 and 15 degrees, for example equal to 12 degrees.

4. The exoskeleton structure according to one of claims 1 to 3, wherein the mechanical linking assembly (36, 46) comprises a third pivot (363, 463) allowing rotation of the foot part (37, 47) relative to the leg part (35, 45) around a third axis of rotation (X3) during a flexure/extension movement of the ankle of the user.

5. The exoskeleton structure according to claim 4, wherein the third pivot (363, 463) is positioned at a height less than the height of the malleolus of the user when the user is standing, in the anatomical reference position.

6. The exoskeleton structure according to one of claims 4 and 5, wherein the third pivot (363, 463) is positioned toward the back of the foot of the user relative to the malleolus of the user.

7. The exoskeleton structure according to one of claims 4 to 6, wherein the first axis of rotation (X1) is oriented so that the distance between the first axis of rotation (X1) and the third axis of rotation (X3) is less than or equal to 5 centimeters.

8. The exoskeleton structure according to one of claims 4 to 7, wherein the first axis of rotation (X1) is oriented so that it intersects the third axis of rotation (X3).

9. The exoskeleton structure according to one of claims 4 to 8, wherein the third axis of rotation (X3) is oriented so that it forms a second nonzero angle (γ) with a frontal plane of the user when the user is standing, in the anatomical reference position, the second angle being comprised between 1 and 15 degrees, preferably between 4 and 7 degrees, for example equal to 6 degrees.

10. The exoskeleton structure according to one of claims 4 to 9, wherein the third axis of rotation (X3) is oriented so that it forms a third nonzero angle (β) with a transverse plane of the user when the user is standing, in the anatomical reference position, the angle being comprised between 5 and 15 degrees, preferably between 6 and 8 degrees, for example equal to 8 degrees.

11. The exoskeleton structure according to one of claims 4 to 10, wherein the mechanical linking assembly (36, 46) comprises a linking part (362, 462) having a first end (366, 466) connected to the leg part (35, 45) via the first pivot (361, 461) and a second end (367, 467) connected to the third pivot (363, 463), the linking part (362, 462) comprising two portions (368, 369, 468, 469) mounted sliding relative to one another in order to adjust a length of the linking part (362, 462), and a locking device to lock the two portions (368, 369, 468, 469) relative to one another once the length is adjusted.

12. The exoskeleton structure according to claims 1 to 11, wherein the second axis of rotation (X2) is oriented so that it forms a fourth nonzero angle (δ) relative to a horizontal direction when the user is standing, in the anatomical reference position, the angle being comprised between 1 and 30 degrees, preferably between 15 and 25 degrees, for example 18 degrees.

13. The exoskeleton structure according to one of claims 1 to 12, wherein the second axis of rotation (X2) is oriented so that it passes below the malleolus of the user when the user is standing, in the anatomical reference position.

14. The exoskeleton structure according to one of claims 1 to 13, wherein the second axis of rotation (X2) is oriented downward when the second axis of rotation (X2) is followed from the back of the foot toward the front of the foot of the user, when the user is standing, in the anatomical reference position.
